# EUROPEAN PATENT APPLICATION

(11) **EP 4 446 100 A1**
(43) Date of publication of application: **16.10.2024**
(21) Application number: 23168032.3
(22) Date of filing: 14.04.2023
(51) Int. Cl.: B29C 70/54, B29C 70/44, B29L 31/08

(54) **MOULDING APPARATUS**

(71) Applicant: Siemens Gamesa Renewable Energy A/S, 7330 Brande (DK)
(72) Inventor: Lucas, Thomas George, 9000 Aalborg (DK); Duman, Sinan, 9000 Aalborg (DK); Nielsen, Mogens, 9220 Aalborg (DK)
(74) Representative: SGRE-Association

(57) **Abstract**

The invention describes a moulding apparatus (1) comprising an enclosing structure (11) dimensioned to fit over a laminate part (4) arranged on a moulding surface (2); an elastomer sheet (10) arranged to cover an opening defined by the lower perimeter of the enclosing structure (11); a lower perimeter seal arrangement (1LS) formed alongside the edge of the elastomer sheet (10) on its underside (102); and an upper perimeter seal arrangement (1US) between the enclosing structure (11) and the elastomer sheet (10). The invention further describes a moulding assembly (2) and a method of casting a laminate part.

## Description

### Background

A resin-infused laminated structure can be manufactured using a vacuum bag moulding process, in which the part is placed in a bag which is then sealed, or placed under a plastic sheet which is bonded on all sides to an air-tight mould or support surface. Air is then evacuated from the vacuum bag to create a vacuum which is maintained during resin infusion and curing stages. In prior art moulding techniques, the vacuum bag can be provided as a sheet of extruded polymer film. Before placing the sheet over the laminate part, butyl rubber tape is applied to the mould surface, and the edge of the sheet is then pressed onto the butyl rubber tape to form an air-tight seal.

In some procedures, it is known to use two polymer sheets, each with a separate seal, arranged so that the outer sheet maintains the vacuum in case the inner sheet fails. Both of these must be bonded to the mould surface, i.e. two butyl rubber seals are required. For example, a first butyl seal is prepared on the mould table, surrounding the laminate part. An inner bag is then placed over the laminate part and its outer edge is pressed onto the first butyl tape to form a seal, which is then tested for air-tightness. A second butyl tape is applied on the mould table, surrounding the inner bag. An outer bag is then placed over the inner bag and its outer edge is pressed onto the second butyl tape to form a seal, which is then also tested for air-tightness.

After establishing a first vacuum between the inner bag and the laminate part, and a second vacuum between the inner bag and the outer bag, resin is infused through an inlet branch of a resin infusion apparatus. When resin infusion is complete, the part is cured. After curing, the sheets are removed and discarded. The butyl tape seals are removed and discarded. Various other consumables such as resin hose connectors are removed and discarded. A drawback of this prior art approach is the large quantity of non-recyclable waste. Since the disposable sheets are contaminated with resin, recycling is difficult or even impossible. Furthermore, it is time-consuming to apply the butyl seals and to perform the necessary tests for air-tightness, to avoid failure due to leaks arising during the infusion process. Loss of vacuum during the infusion process can be catastrophic, i.e. the partially infused laminate part cannot be saved and must be destroyed. Particularly in the case of carbon-fibre reinforced laminate parts, such errors can be very costly.

Curing of the resin-infused part can be accelerated by heat. In the case of small laminate structures, the vacuum-bagged assembly can be placed in an oven to cure. In the case of a very large laminate part that is moulded on a table, the curing stage can be assisted by heating elements incorporated in the table. However, the one-sided heating can result in defects in the cured part.

It is therefore an object of the invention to provide an improved way of casting a large laminate part.

This object is achieved by the claimed moulding apparatus, by the claimed moulding assembly, and by the claimed method of casting a laminate part.

### Description

The inventive moulding apparatus is used during resin infusion and curing steps in a casting procedure. It shall be assumed that the laminate part being moulded is arranged on a moulding surface, also referred to herein as a support surface or a moulding table, and that the moulding apparatus is placed over the laminate part, so that the laminate part is enclosed in a space defined by the support table and the moulding apparatus. The enclosing structure of the inventive moulding apparatus shall be understood to comprise an upper surface (which can be essentially flat), and side walls extending downward from the upper surface.

According to the invention, the moulding apparatus comprises an enclosing structure dimensioned to fit over a laminate part arranged on a moulding table or support. The lower perimeter of the enclosing structure therefore defines an aperture. An elastomer sheet extends over the lower perimeter of the enclosing structure, i.e. the elastomer sheet covers the aperture defined by the lower edges of the enclosing structure. On the underside of the elastomer sheet, along its outer edge, an inflatable seal arrangement is provided. The moulding apparatus further comprises an air-tight interface between the enclosing structure and the elastomer sheet, thereby defining an interior space in which a vacuum can be established in a stage preceding or following infusion and curing stages as will be explained below. In the following, this interior space is referred to as the lifting vacuum space of the inventive moulding apparatus.

Since the elastomer sheet extends underneath the enclosing structure, the elastomer sheet covers the laminate part when the moulding apparatus is lowered onto the support surface. The elastomer sheet can be made of silicone rubber, for example, or any other suitable elastomer. The elastomer sheet can be injection moulded to comprise various surface features such as protrusions, ridges, grooves, holes, etc. Alternatively, surface features can be bonded to the elastomer sheet. One such surface feature forms part of the air-tight interface between the enclosing structure and the elastomer sheet.

The inflatable seal arrangement on the underside of the elastomer sheet is used to form an air-tight seal between the elastomer sheet and the moulding surface during a preparatory step of a moulding procedure. The inflatable seal arrangement can be formed as part of the elastomer sheet or can be bonded to the elastomer sheet.

According to the invention, the moulding assembly comprises a lower mould; a laminate part arranged on the lower mould; and an embodiment of the inventive moulding apparatus arranged to enclose the laminate part.

The inventive method of casting a laminate part comprises the steps of arranging a part to be moulded on a support surface; suspending the inventive moulding apparatus above the part; securing the elastomer sheet to the part; lowering the moulding apparatus onto the support surface; establishing a vacuum in the perimeter seal vacuum space defined by the inflatable seal arrangement and the moulding surface; and connecting ports of a resin infusion assembly.

An advantage of the invention is that the inflatable seal arrangement removes the need for butyl seals. This leads to considerable savings in time, since the time-consuming application of butyl rubber tapes and air-tightness testing steps are no longer required.

Another advantage of the invention is that the elastomer sheet can be used multiple times, thereby drastically reducing the quantity of waste. The expressions "elastomer sheet" and "reusable vacuum bag" shall be understood to be synonyms in the context of the invention, and may be used interchangeably herein.

Furthermore, the elastomer sheet remains attached to the enclosing structure at all times. Therefore, during preparatory stages and after completion of the curing stage, the elastomer sheet does not require any manual handling.

Particularly advantageous embodiments and features of the invention are given by the dependent claims, as revealed in the following description. Features of different claim categories may be combined as appropriate to give further embodiments not described herein.

In the following, it may be assumed that the part to be moulded is an essentially elongate object. The cured part can be a component that will be embedded in another structure, for example the cured part can be a spar cap or "beam" of a wind turbine rotor blade. The spar cap of a wind turbine rotor blade can have essentially the same length as the rotor blade. For example, for a wind turbine rotor blade with a length in the order of 100 m, a spar cap may have a length approaching 100 m. For such a large rotor blade, the width of the spar cap can be in the order of 150 mm near the root end, tapering to 50 mm or less towards the tip end of the rotor blade; the height of the spar cap can be thickest near the root end, tapering towards the tip end of the rotor blade.

The shape of the enclosing structure can have a shape that is based on the shape of the part to be moulded. In the following, without restricting the invention in any way, it may be assumed that the enclosing structure is essentially rectangular in shape. The enclosing structure shall be understood to be a rigid housing constructed to retain its form under vacuum. The terms "enclosing structure" and "rigid housing" can be used interchangeably herein. The rigid housing can be made of welded steel sections, for example. Alternatively, the rigid housing can be made by constructing a steel frame, cladding the frame with panels of a suitable material, and forming hermetic seals between any joints. Equally, the rigid housing can be manufactured as a composite structure using glass-fibre and/or carbon-fibre reinforced material. Of course, the rigid housing can be constructed using any combination of suitable materials.

It shall be understood that the enclosing structure is large enough to fit about the laminate part with some clearance above the part and along its outer faces. In the case of a large laminate part, the weight of the moulding apparatus can be significant. Therefore, in a preferred embodiment of the invention, the mounting apparatus comprises a lifting interface or lifting structure to assist in lifting the moulding assembly into place prior to an infusion procedure, and for removing the moulding assembly off the support table after curing. A lifting interface can be welded to the upper surface of the rigid housing, for example. The lifting structure is preferably realised to distribute loads evenly during lifting, so that the enclosing structure does not deform when suspended in the air. The lifting interface can comprise a framework with eyelets for connecting to the hook of a crane, for example.

In vacuum-bag infusion techniques, resin must be fed into the vacuum bag so that it can infuse through the layers of the laminate part. To this end, inlet and outlet ports are generally provided in a vacuum bag. In the inventive moulding apparatus, the reusable vacuum bag is preferably manufactured to comprise suitable ports for connection to inlet and outlet hoses of a resin infusion apparatus. Since any such ports of the reusable vacuum bag are not directly accessible in the inventive mounting apparatus, in a preferred embodiment the enclosing structure comprises one or more access openings arranged to provide access to the interior of the enclosing structure and to any ports of the reusable vacuum bag. For example, in a preparatory stage, a technician can reach through an access opening to connect a resin hose to a suitable port of the reusable vacuum bag. When the resin infusion apparatus has been connected, the access openings can be closed. In a particularly preferred embodiment of the invention, such access openings in the mounting apparatus are hermetically sealable so that air cannot enter or leave the space between the enclosing structure and the reusable vacuum bag.

In a particularly preferred embodiment of the invention, along the perimeter of the opening defined by the lower edges of the side walls, a flange projects horizontally outward. This outwardly projecting part can be referred to herein as the housing flange.

In a particularly preferred embodiment of the invention, the upper perimeter seal is an air-tight interface realised as a form-fit seal between a lower face of the enclosing structure and the upper surface of the reusable vacuum bag. For example, an angular groove may be formed along the lower face of the enclosing structure, for example in the underside of the housing flange, and the reusable vacuum bag can be moulded to comprise a corresponding angular protrusion, so that these features form a tongue-and-groove form-fit seal.

The lower perimeter seal arrangement can be realized in any suitable manner. In a particularly preferred embodiment of the invention, the lower perimeter seal arrangement comprises at least one inflatable bead extending about the perimeter of the elastomer sheet. An inflatable bead shall be understood to be a hollow tubular element extending about the perimeter of the sheet on its underside. A inflatable bead can be formed as part of the reusable vacuum bag. Alternatively, such an inflatable bead can be realized by bonding an elastomer tube to the reusable vacuum bag.

In a particularly preferred embodiment of the invention, the inflatable seal arrangement comprises a pair of essentially parallel beads. One or both of these beads can be inflatable, for example the seal arrangement can comprise one inflatable bead near the outer edge of the reusable vacuum bag, and another inflatable bead arranged at a distance inward. Alternatively, the outer bead may be solid, while the inner bead is inflatable. The tubular elements of the perimeter lower seal arrangement can be referred to herein as perimeter seal beads or simply perimeter beads.

When the moulding apparatus is in use, an inflatable bead is filled with a fluid - any suitable gas or liquid - and the space between the beads is then evacuated. By evacuating the space between the beads, a perimeter lower seal is formed between the support surface and the mounting apparatus. The space between the beads is referred to herein as the perimeter seal vacuum space. In a preferred embodiment of the invention, the mounting apparatus comprises an air extraction means to extract air from the perimeter seal vacuum space. For example, a nozzle can extend through the housing flange into the space between the perimeter beads, allowing a first vacuum pump to be connected to the perimeter seal vacuum space. During a preparatory stage, when the mounting apparatus rests on the support surface, an arrangement of clamps is preferably deployed to press the enclosing structure onto the support surface. The perimeter seal vacuum space is then evacuated to establish the lower seal about the perimeter of the mounting apparatus. The underpressure in the perimeter seal vacuum space can be in the order of 5 mbar (500 Pa), for example.

The clamps, which mechanically press the enclosing structure onto the support surface, allow the inflatable bead(s) to be inflated, for example to an overpressure in the order of 1 - 3 bar (100 - 300 kPa). This overpressure in turn allows a powerful vacuum to be established in the perimeter seal vacuum space, for example an underpressure as low as 5 mbar (500 Pascal) can be achieved in the perimeter seal vacuum space when the clamps are left in place.

After establishing the lower perimeter seal, the method can proceed with a step of establishing a vacuum in the infusion vacuum space defined by the elastomer sheet and the moulding surface. To this end, the inventive moulding assembly preferably comprises a second air extraction means adapted to extract air from the infusion vacuum space. For example, the reusable vacuum bag can be moulded to include one or more ports to receive a nozzle and seal arrangement, allowing a second vacuum pump to be connected to the infusion vacuum space. During the preparatory stage, the infusion vacuum space is evacuated to establish a vacuum between the elastomer sheet and the moulding surface, i.e. in the space in which the laminate part is arranged. The underpressure in the infusion vacuum space can be 5 mbar (500 Pa) or lower. A favourably low underpressure can be achieved if the clamps remain in place about the enclosing structure.

The underpressure has the effect of pulling the reusable vacuum bag tightly against the laminate part and against the moulding table (to avoid damage to the elastomer sheet, the outer edges of the laminate part can be rounded). The method can then proceed with the resin infusion step. To this end, the reusable vacuum bag is preferably formed to comprise one or more resin inlet ports and resin outlet ports to allow resin to be drawn through the laminate part. An inlet hose can extend from a resin reservoir through an access port in the enclosing structure to a resin inlet port. Similarly, an outlet hose can extend from a resin outlet port through another access port of the enclosing structure. In the usual manner as will be known to the skilled person, the resin infusion procedure can comprise steps of preparing the resin components by heating and de-gassing and then mixing the resin components; filling the feed lines and then assisting the resin (by the vacuum underpressure) to fill the flow channels, the flow mesh, and all layers of the dry fibre laminate. Ultimately, the resin reaches one or more outlets and can be extracted in any suitable manner. Throughout the infusion procedure, the previously established lower perimeter seal ensures that air cannot leak into the infusion vacuum space.

An advantage of the invention is that a loss of vacuum in the infusion vacuum space can be remedied even during the resin infusion step. A loss of vacuum in the infusion vacuum space will connect the infusion vacuum space and the perimeter seal vacuum space. The first vacuum extraction means can be operated to extract air from the connected perimeter seal and infusion vacuum spaces, thereby re-establishing the vacuum. With this essentially immediate remedy for vacuum loss, the resin infusion stage need not be interrupted.

Once resin infusion is complete, the part can be cured. In the prior art vacuum bag casting techniques, the support table is usually constructed to include a heating means so that the part can be heated in order to accelerate the curing step. In a particularly preferred embodiment of the invention, the reusable vacuum bag is manufactured to also include a heating means, for example a mesh of metal wires can be embedded in the elastomer sheet and connected to a battery so that heat can also be applied to the laminate part from above. An advantage of such an embodiment is that the infused resin is heated more evenly. This reduces the curing time further and also improves the quality of the cured part.

After curing, the resin transfer assembly can be removed by opening the access ports and disconnecting the resin hoses from the reusable vacuum bag. The moulding apparatus can then be removed from the cured part. This can be done in stages. For example, in a first stage the perimeter seal vacuum space and the infusion vacuum space can be vented, i.e. the vacuum ports can be opened to allow air to enter these spaces. In a further preferred embodiment, pressurized air can be fed into the infusion vacuum space to assist in releasing the reusable vacuum bag from the cured part and the moulding table. For example, pressurized air can be pumped into the infusion vacuum space to encourage the reusable vacuum bag to detach from the cured part and the moulding table.

In a final stage, the crane is operated to lift the moulding apparatus upward from the moulding table, revealing the cured part. In a particularly preferred embodiment of the invention, a vacuum is then established in the lifting vacuum space. To this end, the mounting apparatus comprises an air extraction means to extract air from the lifting vacuum space. As explained above, the housing flange and the reusable vacuum bag are joined by an air-tight interface. This allows an underpressure to be established in the lifting vacuum space above the reusable vacuum bag, pulling it upwards into the enclosing structure. The underpressure in the lifting vacuum space can be in the order of 100 - 800 mbar (10 - 80 kPa). In this way, the entire moulding apparatus can be removed from the cured part without the need to manually handle the reusable vacuum bag, since this remains attached to the enclosing structure at all times and is pulled out of the way by the vacuum in the lifting vacuum space, i.e. the reusable vacuum bag does not hang down as the mounting apparatus is being removed. The crane can then be operated to lift the moulding apparatus away from the moulding table, revealing the cured part.

As explained above, the reusable vacuum bag can incorporate heating elements to assist in the curing procedure. In a further preferred embodiment of the invention, the reusable vacuum bag can be manufactured to incorporate a flow-front sensor which can assist in monitoring the resin infusion process. Wires connecting such a sensor to a power supply and a read-out unit (e.g. a processor with display) can pass through hermetically sealed through-holes in the enclosing structure. A flow front sensor can be used to track the progress of the resin flow front. With this information, the resin inlet valves can opened and closed at the correct times. Alternatively or in addition, the reusable vacuum bag can incorporate various other sensors, for example a temperature sensor, a pressure sensor, etc.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a cross-section through an embodiment of the inventive moulding apparatus;
Figures 2 and 3 show embodiments of the inventive moulding apparatus;
Figures 4 - 7 show stages in an embodiment of the inventive beam moulding method;
Figure 8 shows an exemplary flow-chart of the inventive moulding method;
Figure 9 shows an exemplary elastomer sheet of the inventive moulding apparatus;
Figure 10 shows a prior art moulding apparatus.

In the diagrams, like numbers refer to like objects throughout. Objects in the diagrams are not necessarily drawn to scale.

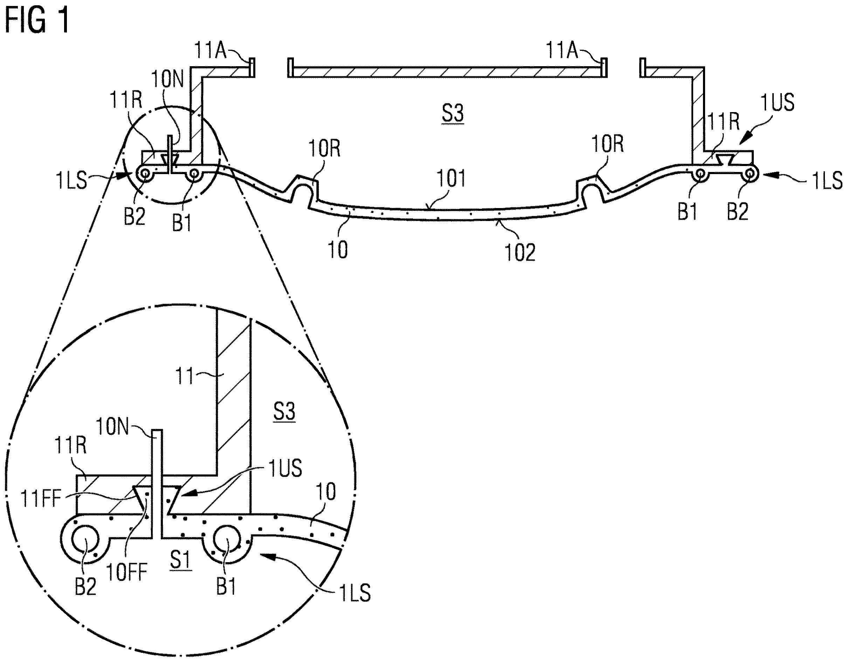

Figures 1 - 3 explain relevant features of the inventive moulding apparatus 1. Figure 1 is a cross-section through an embodiment of the inventive moulding apparatus 1, and shows a reusable bag 10 joined to a rigid housing 11. When not in use, as shown here, the reusable bag 10 hangs from the housing 11.

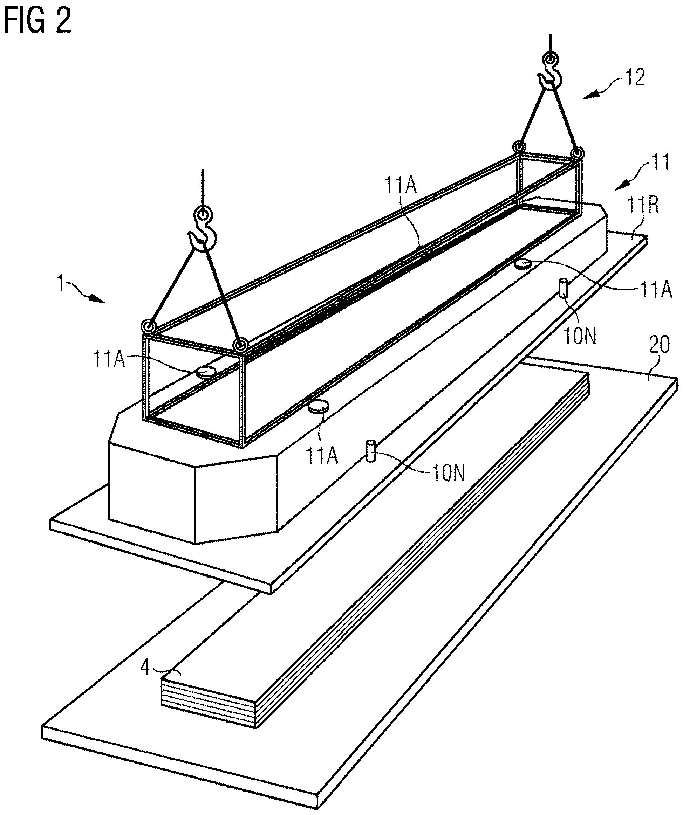

The rigid housing 11 can have an essentially rectangular shape as shown in Figure 2, since the beam of a wind turbine rotor blade is also essentially rectangular in shape. Along its lower edge, a rim 11R protrudes outwards. As explained above, the rigid housing 11 is constructed to retain its form under vacuum.

In this exemplary embodiment, the reusable bag 10 is joined to the rigid housing 11 by a form-fit upper perimeter seal 1US as shown in the enlarged region. Along the perimeter of the bag 10 on its upper surface 101, an upwardly protruding tongue 10FF is formed, and the underside of the housing rim 11R is formed with a complementary groove or recess 11FF. To assemble these parts, the flexible elastomer tongue 10FF can be manually pressed into the groove 11US in the underside of the housing rim 11R to complete the form fit. The form fit 1US extends all about the perimeter of the housing 11, so that the housing 11 and reusable bag 10 form a closed cavity S3, referred to herein as the lifting vacuum space S3.

A lower perimeter seal arrangement 1LS extends along the perimeter of the bag 10 on its underside 102. Here, the lower perimeter seal arrangement 1LS comprises a pair of essentially parallel beads B1, B2. The inner bead B1 (and optionally also the outer bead B2) is hollow and can have a tubular shape as shown here. One or more valves can be provided to connect a hollow bead to a pump so that pressurized air can inflate the hollow bead(s) B1, B2.

An air extraction nozzle 10N extends from between the beads B1, B2 through the housing rim 11R and is accessible from outside the housing 11. The purpose of the nozzle will be explained below. Several such air extraction nozzles 10N can be provided, spaced at intervals along the housing rim 11R. The space between the beads B1, B2 is referred to herein as the perimeter seal vacuum space S1.

Figure 2 shows a perspective view of the moulding apparatus 1 of Figure 1, in which the essentially oblong or rectangular shape of the housing 11 is indicated.

Here, the moulding apparatus 1 is suspended above a lower mould 20 of a moulding assembly 2, in this case a flat table 20, supporting a laminate part 4. The diagram illustrates a stage prior to resin infusion and curing (the mould assembly 1 is being lowered into place to enclose the part 4), and also a stage after completion of curing (the mould assembly 1 has been released from the cured part 4 and is being lifted away from the table 20).

In this embodiment, the mould assembly 1 comprises a lifting structure 12 mounted to the rigid housing 11, for use in lifting the assembly 1 into place prior to an infusion procedure, and for removing the assembly 1 from the cured part. The spar cap of a long wind turbine rotor blade can have dimensions as described above. The housing 11 of the inventive moulding apparatus will exceed these dimensions and will therefore be correspondingly heavy. Preferably, the lifting structure 12 is constructed so that the housing 11 does not deform when suspended from a lifting apparatus (not shown).

The diagram also indicates several nozzles 10N extending from the perimeter seal vacuum space S1 of the reusable bag 10 (which is concealed from view by the housing 11) through the housing rim 11R.

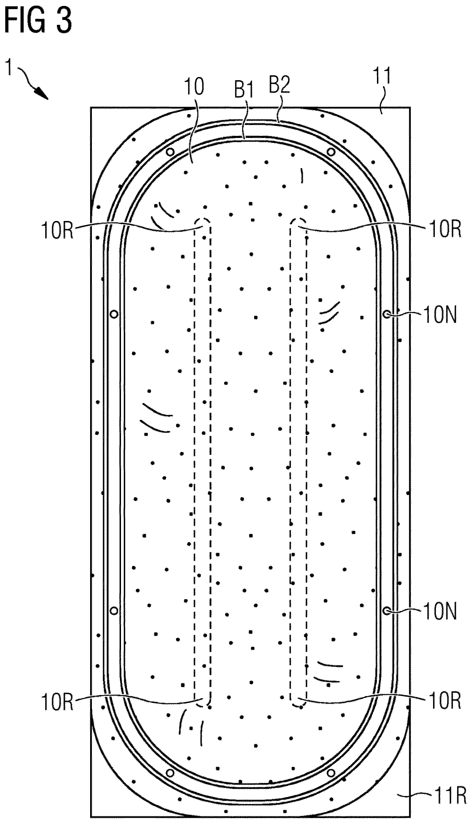

Figure 3 shows a view of the moulding apparatus 1 of Figures 1 and 2 from below, looking onto the reusable vacuum bag 10. The diagram shows the parallel beads B1, B2 of the inflatable seal arrangement 1LS extending about the perimeter of the sheet 10, and several air extraction nozzles 10N in the space between the beads B1, B2. In this exemplary embodiment, the bag 10 is formed to comprise resin inlet features 10R which run the length of the laminate part 4 to distribute resin during the infusion procedure. The resin inlet features 10R are shaped to fit about resin inlet and outlet ports, and suitable seals can be attached about these ports to ensure that resin does not leak from within the infusion vacuum space.

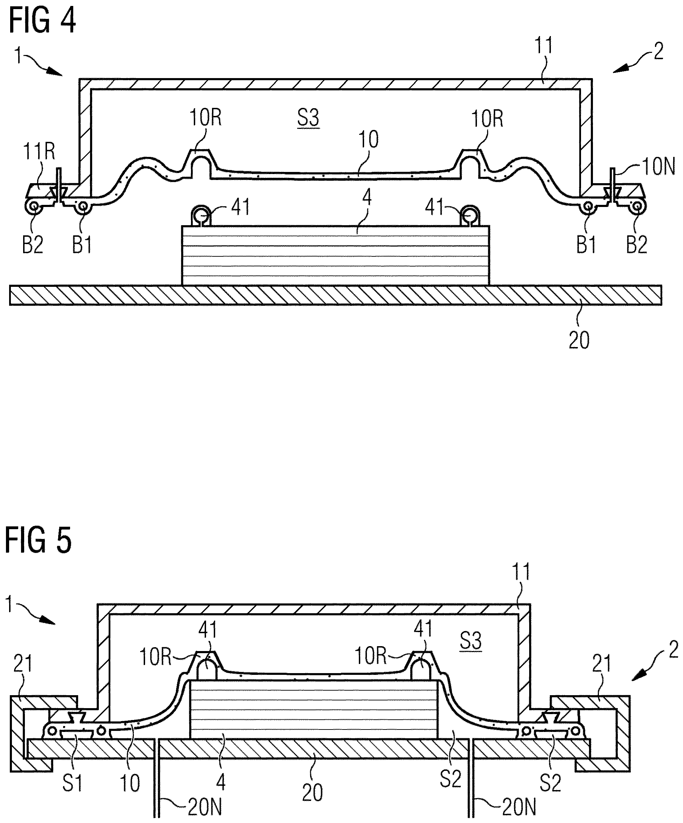

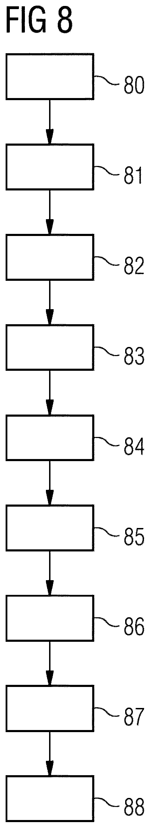

Figures 4 - 7 show exemplary stages of the inventive method, and Figure 8 shows the sequence of steps 80 - 88 in this exemplary embodiment of the method.

For clarity, not all air extraction nozzles, resin inlets, resin outlets, service openings etc. are shown in Figures 4 to 7, but a suitable number of each shall be assumed to be provided as explained above.

In step 80 as shown in Figure 4, the moulding apparatus 1 is suspended over a laminate beam 4 arranged on a moulding surface 20 or table. The diagram shows a widthwise cross-section through the moulding apparatus 1 and spar cap 4. While the housing 11 is suspended above the table 20, technicians secure the reusable vacuum bag 10 to the laminate part 4.

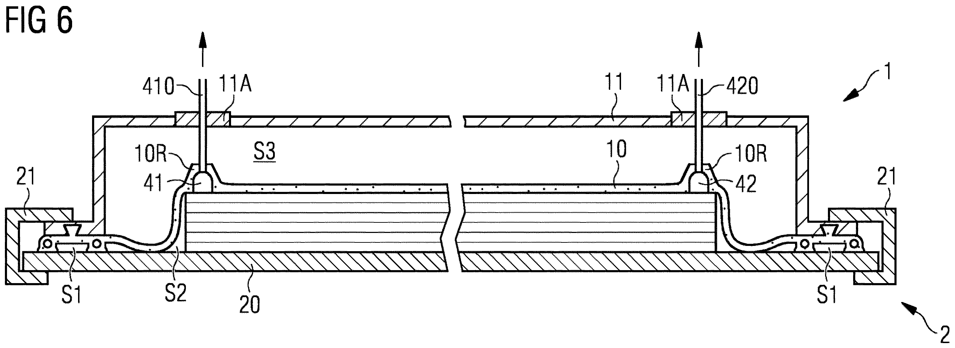

A resin feed line 410 is attached to the laminate part 4 by a suitable resin inlet consumable 41. A resin extraction line 420 is attached to the laminate part 4 by a suitable resin outlet consumable 42. For clarity, these connections are shown in Figure 6. The resin lines 410, 420 can pass through suitable seals at appropriate locations in the enclosing structure 11. These connections can be made through the access openings 11A of the housing 11, which are then sealed in an air-tight fashion.

In step 81 as shown in Figure 5, the moulding apparatus 1 has been lowered onto the table 20 and has been released from the lifting apparatus. Clamps 21 are put into place about the moulding apparatus 1, to clamp the housing rim 11R and table 20. In stage 82, while these clamps 21 are in place, a pump is actuated to pump air into the inflatable bead(s) B1, B2 to a suitable pressure as explained above. In stage 83, using a first vacuum pump, air is extracted through the nozzles 10N from the perimeter seal vacuum space S1 to create a first vacuum, which acts to press the perimeter of the elastomer sheet 10 onto the table 20, forming a tight seal. The clamps can be left in place so that, in a subsequent step, a favourably large underpressure can be achieved the infusion vacuum space S2.

In step 84, using a second vacuum pump, air is extracted through one or more nozzles - provided for example in the support surface - from the infusion vacuum space S2. The resulting vacuum in the infusion vacuum space S2 causes the reusable bag 10 to be pulled tightly against the laminate part 4 on all sides, and also against the table 20, as illustrated in Figure 6, which shows a lengthwise cross-section through the moulding apparatus 1 and spar cap 4.

In stage 85, resin transfer is performed to infuse resin throughout the layers of the laminate part 4. During resin infusion, if for any reason there is a loss of vacuum in the infusion vacuum space S2, this can be remedied by the inventive moulding apparatus 1: a loss of vacuum in the infusion vacuum space S2 will connect the infusion vacuum space S2 and the perimeter seal vacuum space S1. Therefore, by actuating the first vacuum extraction means, the vacuum in the infusion vacuum space S2 can be re-established and the resin infusion stage need not be interrupted.

In step 86, the resin-infused part is allowed to cure. Curing can be assisted by heating elements incorporated in the table 20, and may also be assisted by heating elements incorporated in the reusable bag 10.

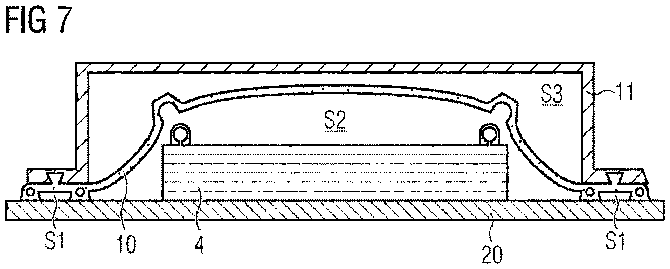

After curing, the moulding apparatus 1 is removed in step 87 as illustrated in Figure 7. This is done by venting air into the infusion vacuum space S2 to a moderate overpressure, thereby pushing the reusable bag 10 away from the laminate part 4. The perimeter seal vacuum space S1 is also vented to allow the space between the beads B1, B2 to fill with air.

The moulding apparatus 1 is then raised from the table to allow the reusable bag 10 to lift from the edges of the cured part 4. In a final stage 88, using a third vacuum pump, air is extracted from the lifting vacuum space S3. This creates a moderate underpressure between the reusable bag 10 and the housing 11, with the result that the reusable bag 10 is pulled outward and away from the cured part 4. The moulding apparatus 1 can then be lifted to a storage location until required again, as indicated in Figure 1.

As the skilled person will appreciate, a singe vacuum assembly with a suitable control arrangement can be used in lieu of three separate vacuum pumps.

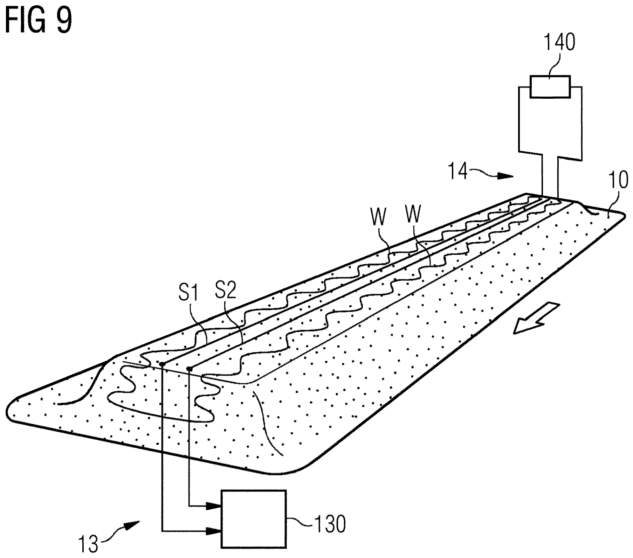

Figure 9 shows a further realization of the elastomer sheet 10 of the inventive moulding apparatus 1. The sheet 10 is shown in place over a laminate part, as it may appear at some stage during the inventive method. For clarity, the enclosing structure 11, the perimeter seal and the resin port connections are not shown but may be assumed to be present. Here, the moulding apparatus 1 comprises a flow-front sensing assembly 13, with two line sensors S1, S2 attached to or embedded in the elastomer sheet 10. The line sensors S1, S2 detect a resin flow front (an exemplary resin flow direction is indicted by the arrow), and the progress of the flow front can be observed on a monitor 130.

In this exemplary embodiment, the moulding apparatus 1 also comprises a heating assembly 14, with a thin copper wire W embedded in the body of the elastomer sheet 10 and a means 140 of applying a voltage across the ends of the wire. This heating assembly 14 can be used in addition to a heating circuit provided in the support surface 20. After resin infusion is complete, an electric current can flow through the wire W, which becomes hot and facilitates a more even curing of the laminate part.

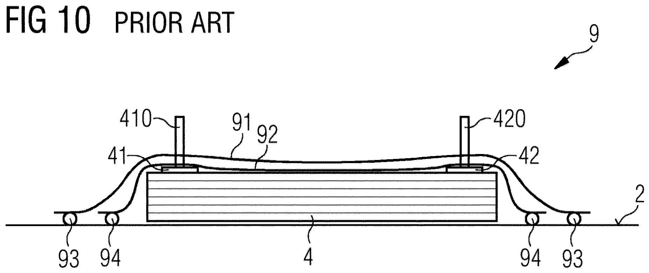

Figure 10 shows a cross-section through a prior art moulding apparatus 9, in which a laminate part 4 is arranged on a lower mould surface 20 or table. Here, two single-use bags 91, 92 are required, and these must be bonded to the lower mould surface 20, for example using butyl rubber tape. To this end, a first butyl tape 94 is manually applied to the table 20. A single-use inner bag 91 is then placed over a laminate part 4 and its perimeter is pressed onto the first butyl tape 94. This inner seal 94 is then tested for air-tightness. A second butyl tape 93 is then manually applied to the table 20 about the perimeter of the single-use inner bag 91. A larger single-use outer bag 92 is placed over the inner bag 91, and its perimeter is pressed onto the outer butyl tape 93. This outer seal 93 is then tested for air-tightness. A resin inlet branch 41 extends from the exterior through the bags 91, 92 to the laminate part 4 and is attached to the laminate part by an inlet consumable 410. A resin outlet branch 42 extends from the laminate part 4 through the bags 91, 92 to the exterior and is attached to the laminate part by an outlet consumable 420. After establishing a first vacuum between the inner bag 91 and the laminate part 4, and a second vacuum between the inner bag 91 and the outer bag 92, resin is infused through the inlet branch 41. The infused part 4 is then cured. To this end, the table 20 may incorporate heating elements (not shown) to facilitate curing. After curing is complete, the single-use bags 91, 92 and the butyl seals 93, 94 are removed and discarded. The prior art approach is expensive, since the material cost of butyl tape and single-use bags for each casting cycle can be significant, particularly when many casting cycles are to be performed. Furthermore, it is time-consuming to apply the butyl seals 93, 94 and to perform the highly important tests for air-tightness, and these tasks require experienced personnel. Furthermore, a leak arising during the infusion process cannot be remedied and a partially infused laminate beam 4 may need to be discarded.

Although the present invention has been disclosed in the form of preferred embodiments and variations thereon, it will be understood that numerous additional modifications and variations could be made thereto without departing from the scope of the invention. For example, the moulding apparatus can also be used to consolidate a preform element and hardening of this preform element.

For the sake of clarity, it is to be understood that the use of "a" or "an" throughout this application does not exclude a plurality, and "comprising" does not exclude other steps or elements.

## Claims

1. A moulding apparatus (1) comprising
- an enclosing structure (11) dimensioned to fit over a laminate part (4) arranged on a support surface (20);
- an elastomer sheet (10) arranged to cover an opening defined by the lower perimeter of the enclosing structure (11) ;
- a lower perimeter seal arrangement (1LS) formed alongside the edge of the elastomer sheet (10) on its underside (102); and
- an upper perimeter seal arrangement (1US) between the enclosing structure (11) and the elastomer sheet (10).

2. A moulding apparatus according to the preceding claim, wherein the upper perimeter seal arrangement (1US) is realised as a form-fit seal (10FF, 11US) between the enclosing structure (11) and the elastomer sheet (10).

3. A moulding apparatus according to any of the preceding claims, wherein the lower perimeter seal arrangement (1LS) comprises a number of hollow beads (B1, B2) and a means of inflating the hollow beads (B1, B2).

4. A moulding apparatus according to any of the preceding claims, an air extraction arrangement adapted to extract air from a perimeter seal vacuum space (S1) defined by the lower perimeter seal arrangement (1LS) and the support surface (20) .

5. A moulding apparatus according to any of the preceding claims, an air extraction arrangement adapted to extract air from an infusion vacuum space (S2) defined by the elastomer sheet (10) and the support surface (20).

6. A moulding apparatus according to any of the preceding claims, an air extraction arrangement adapted to extract air from a lifting vacuum space (S3) defined by the enclosing structure (11), the elastomer sheet (10) and the air-tight interface (1US).

7. A moulding apparatus according to any of the preceding claims, wherein the elastomer sheet (10) is adapted to comprise a number of connecting elements for attaching the elastomer sheet (10) to resin ports.

8. A moulding apparatus according to any of the preceding claims, wherein the enclosing structure (11) comprises a hermetically sealable access opening (11A) to provide access to the interior of the enclosing structure (11).

9. A moulding apparatus according to any of the preceding claims, wherein the elastomer sheet (10) is formed to incorporate a heating means (10W) for heating the part (4) during a curing stage.

10. A moulding apparatus according to any of the preceding claims, wherein the elastomer sheet (10) is formed to incorporate any of: a flow-front sensor (10FF), a temperature sensor, a pressure sensor.

11. A moulding assembly (2) comprising
- a support surface (20);
- a laminate part (4) arranged on the support surface (20);
- a moulding apparatus (1) according to any of claims 1 to 10 arranged to enclose the laminate part (4).

12. A moulding assembly according to the preceding claim, wherein the laminate part (4) is a structural component of a wind turbine rotor blade.

13. A method of casting a laminate part, which method comprises steps of
- arranging a part (4) to be moulded on a support surface (20) ;
- lifting a moulding apparatus (1) according to any of claims 1 to 10 into place above the part (4);
- lowering the moulding apparatus (1) onto the support surface (20);
- attaching resin lines (410, 420) of a resin infusion assembly to connecting elements of the elastomer sheet (10); and
- establishing a first vacuum in the perimeter seal vacuum space (S1) defined by support surface (20) and the lower perimeter seal arrangement (1LS) of the moulding apparatus (1).

14. A method according to the preceding claim, comprising steps of
- establishing a second vacuum in the infusion vacuum space (S2) defined by the elastomer sheet (10) and the support surface surface (20);
- infusing resin through the part (4); and
- curing the part (4).

15. A method according to the preceding claim, comprising steps of
- venting the infusion vacuum space (S2);
- venting the perimeter seal vacuum space (S1);
- establishing a third vacuum in the lifting vacuum space (S3) defined by the elastomer sheet (10) and the enclosing structure (11) to release the elastomer sheet (10) from the cured part (4);
- raising the moulding apparatus (1) from the support surface (20).
